# FASCICULE DE BREVET EUROPEEN

(11) **EP 4 221 967 B1**
(45) Date de publication et mention de la délivrance du brevet: **12.03.2025**
(21) Numéro de dépôt: 21798416.0
(22) Date de dépôt: 24.09.2021
(51) Int. Cl.: B29D 30/06

(54) **PROCÉDÉ DE FABRICATION D'UNE COUCHE DE PRODUIT AUTO-OBTURANT OPTIMISÉE**
VERFAHREN ZUR HERSTELLUNG EINER OPTIMIERTEN SCHICHT EINES SELBSTDICHTENDEN PRODUKTS
METHOD FOR MANUFACTURING AN OPTIMIZED LAYER OF SELF-SEALING PRODUCT

(30) Priorité: 29.09.2020 FR 2009911
(43) Date de publication de la demande: 09.08.2023
(73) Titulaire: COMPAGNIE GENERALE DES ETABLISSEMENTS MICHELIN, 63040 Clermont-Ferrand (FR)
(72) Inventeur: SARAZIN, Fréderic, 63040 Clermont-Ferrand CEDEX 9 (FR)
(74) Mandataire: M.F.P. Michelin
(86) Numéro de dépôt international: PCT/FR2021/051648
(87) Numéro de publication internationale: WO 2022/069821

(56) Documents cités:
- EP-A1- 3 572 218
- EP-A2- 3 666 510
- US-A- 4 359 354

## Description

La présente invention concerne un procédé de fabrication d'un pneumatique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de EP2629964 un pneumatique comprenant une bande de roulement destinée à entrer en contact avec le sol lors d'un roulage du pneumatique par l'intermédiaire d'une surface de roulement. La bande de roulement comprend des découpures circonférentielles principales ainsi que des nervures centrales agencées axialement respectivement entre deux découpures circonférentielles principales adjacentes et délimitée axialement par lesdites deux découpures circonférentielles principales adjacentes.

Le pneumatique de EP2629964 comprend une couche interne d'étanchéité destinée à former une cavité étanche au gaz de gonflage lorsque le pneumatique est monté sur un support de montage, par exemple une jante ainsi qu'une couche d'un produit auto-obturant s'étendant circonférentiellement radialement à l'intérieur d'une partie de la couche interne d'étanchéité.

Afin de fabriquer un tel pneumatique, on connait un procédé dans lequel on enroule sur plusieurs tours circonférentiels une bande ou un cordon d'un produit auto-obturant radialement à l'intérieur de la couche d'étanchéité du pneumatique encore dépourvu de la couche de produit auto-obturant et au moins en partie au droit de la bande de roulement.

L'étape d'enroulage est conduite selon une loi d'enroulage de la bande ou du cordon dans laquelle les paramètres de la loi restent constants lors de l'étape d'enroulage. Ainsi, dans le cas d'une bande, on enroule la bande de façon à former un tuilage, c'est-à-dire de sorte qu'un recouvrement axial partiel se fasse entre deux tours circonférentiels successifs. Dans le cas d'un cordon, on enroule le cordon en posant un tour circonférentiel de cordon sensiblement à une distance axiale égale à la moitié de la largeur axiale du cordon du tour circonférentiel précédent de sorte que le produit auto-obturant du tour circonférentiel soit au contact du produit auto-obturant du tour circonférentiel précédent. Dans le cas de la bande, la valeur du recouvrement axial entre deux tours circonférentiels successifs est constant et dans le cas du cordon, la distance de pose de deux tours successifs l'un par rapport à l'autre est également constante.

La couche de produit auto-obturant permet, en cas de perforation du pneumatique due à un objet perforant, d'obturer l'orifice créé par l'objet perforant sous l'effet de la pression interne du pneumatique. En effet, sous l'effet de la pression interne du pneumatique, le produit auto-obturant est amené à fluer dans l'orifice d'écoulement de l'air vers l'extérieur, en vue de l'obturer et de rétablir l'étanchéité au gaz de gonflage. De nombreux produits auto-obturant ont été décrits dans l'état de la technique, notamment dans US4426468, EP1090069, WO99/62998, US4113799, US4115172, US4913209, US5085942, US5295525, FR2955587, EP2167329 et EP3572218.

La présence de la couche de produit auto-obturant, si elle s'avère efficace pour lutter contre les perforations, entraine nécessairement un alourdissement du pneumatique par rapport à un pneumatique dépourvu de couche de produit auto-obturant.

L'invention a pour but de fournir un procédé de fabrication d'un pneumatique pourvu d'une couche de produit obturant le plus léger possible et dont la couche de produit auto-obturant est sensiblement aussi efficace contre les perforations que les couches de produit auto-obturant des pneumatiques de l'état de la technique.

A cet effet, l'invention a pour objet un procédé de fabrication d'un pneumatique comprenant :
- une bande de roulement,
- une couche interne d'étanchéité,
- au moins une couche d'un produit auto-obturant s'étendant circonférentiellement radialement à l'intérieur d'une partie de la couche interne d'étanchéité,

procédé durant lequel on enroule sur plusieurs tours circonférentiels une bande ou un cordon d'un produit auto-obturant radialement à l'intérieur de la couche d'étanchéité du pneumatique encore dépourvu de la couche de produit auto-obturant et au moins en partie au droit de la bande de roulement, l'étape d'enroulage étant conduite selon une loi d'enroulage des tours circonférentiels de la bande ou du cordon,
au cours de l'étape d'enroulage, on fait varier au moins un paramètre de la loi d'enroulage permettant de faire varier axialement l'épaisseur de la couche de produit auto-obturant sur au moins 50% de la longueur circonférentielle de la couche de produit auto-obturant.

Les inventeurs à l'origine de l'invention ont déterminé que certaines portions axiales de la bande de roulement présentent un risque de subir une perforation plus élevé que d'autres portions axiales de la bande de roulement. Ainsi, le procédé selon l'invention permet de faire varier volontairement l'épaisseur de la couche de produit auto-obturant afin de différencier les portions axiales de la couche de produit auto-obturant agencées au droit des portions axiales de la bande de roulement présentant un risque relativement élevé de perforation par rapport aux portions axiales de la couche de produit auto-obturant agencées au droit des portions axiales de la bande de roulement présentant un risque moindre de perforation. Grâce à l'invention, et en fonction des usages du pneumatiques ainsi que de la bande de roulement, l'homme du métier pourra déterminer quelles sont les portions axiales de la bande de roulement présentant un risque relativement élevé de perforation et y agencer au droit une portion axiale relativement épaisse de la couche de produit auto-obturant. De façon analogue, l'homme du métier pourra déterminer quelles sont les portions axiales de la bande de roulement présentant un risque moindre de perforation et y agencer au droit une portion axiale relativement mince de la couche de produit auto-obturant, voire supprimer toute épaisseur de couche de produit auto-obturant.

La couche de produit auto-obturant permet, en cas de perforation du pneumatique due à un objet perforant, d'obturer l'orifice créé par l'objet perforant sous l'effet de la pression interne du pneumatique. En effet, sous l'effet de la pression interne du pneumatique, le produit auto-obturant est amené à fluer dans l'orifice d'écoulement de l'air vers l'extérieur, en vue de l'obturer et de rétablir l'étanchéité au gaz de gonflage.

Pour fabriquer une telle couche de produit auto-obturant, le procédé selon l'invention prévoit que l'on fasse varier un des paramètres de la loi d'enroulage des tours circonférentiels. Ainsi, on fait varier axialement l'agencement des tours circonférentiels les uns par rapport aux autres de façon à, dans le cas d'une bande, faire varier la valeur du recouvrement axial entre deux tours circonférentiels successifs et, dans le cas d'un cordon, faire varier la distance de pose entre deux tours circonférentiels successifs. En faisant varier un ou plusieurs des paramètres, on est ainsi capable de faire varier l'épaisseur de la couche de produit auto-obturant.

Par bande, on comprend un élément longiligne de produit auto-obturant dont la section présente une plus grande dimension L selon une première direction et une plus petite dimension l selon une deuxième direction perpendiculaire à la première direction, le rapport L/l étant supérieur ou égal à 1,50. Par cordon, on comprend un élément longiligne de produit auto-obturant pour lequel L/l est strictement inférieur ou égal à 1,50.

Le fait que la couche de produit auto-obturant présente une épaisseur axialement variable sur au moins 50% de la longueur circonférentielle de la couche de produit auto-obturant permet d'envisager des modes de réalisation dans lesquels le pneumatique est dépourvu de couche de produit auto-obturant sur au plus 50% de la longueur circonférentielle de la couche de produit auto-obturant ou encore des modes de réalisation dans lesquels la couche de produit auto-obturant s'étend sur 100% de la longueur circonférentielle de la couche de produit auto-obturant sans pour autant présenter une épaisseur variable sur 100% de la longueur circonférentielle. Bien évidemment, afin de maximiser les effets de l'invention, la couche de produit auto-obturant présente une épaisseur variable sur au moins 75%, plus préférentiellement sur au moins 95% et idéalement sur 100% de la longueur circonférentielle de la couche de produit auto-obturant.

Dans un mode de réalisation permettant de faire varier facilement l'épaisseur de la couche de produit auto-obturant, on choisit certains paramètres spécifiques. Ainsi, au cours de l'étape d'enroulage, on fait varier au moins un des paramètres de la loi d'enroulage permettant de faire varier axialement l'épaisseur de la couche de produit auto-obturant choisi parmi :
- un pas d'enroulage de la bande ou du cordon,
- une vitesse d'enroulage de la bande ou du cordon par rapport à un dispositif d'application de la bande ou du cordon dans le pneumatique,
- une vitesse de déplacement axial du pneumatique par rapport à un dispositif d'application de la bande ou du cordon dans le pneumatique,
- un débit d'extrusion d'un dispositif d'extrusion de la bande ou du cordon,
- une largeur de la bande ou du cordon,
- une épaisseur de la bande ou du cordon,
et de préférence, on fait varier le pas d'enroulage de la bande ou du cordon.

Tous ces paramètres sont connus de l'homme du métier. Le pas d'enroulage est la distance entre axiale entre un même bord de la bande ou du cordon de deux tours circonférentiels successifs. La vitesse d'enroulage est d'enroulage est la vitesse circonférentielle relative de rotation du pneumatique par rapport au dispositif d'application de la bande ou du cordon dans le pneumatique. La vitesse de déplacement axial est la vitesse relative de déplacement axial du pneumatique par rapport au dispositif d'application de la bande ou du cordon. La largeur de la bande est la valeur de la plus grande dimension L décrite ci-dessus. L'épaisseur de la bande est la valeur de la plus petite dimension l décrite ci-dessus. On notera qu'en réglant la largeur ou l'épaisseur sur zéro, on peut obtenir des portions axiales de la couche de produit auto-obturant d'épaisseur nulle.

Dans un mode de réalisation préféré, la variation d'épaisseur est obtenue en faisant varier le nombre de couches. Ainsi :
- on enroule la bande sur elle-même ou le cordon sur lui-même sur Nai > 1 tours circonférentiels radialement superposés sur L ≥ 1 portion(s) axiale(s) de la couche de produit auto-obturant, i allant de 1 à L,
- on enroule la bande sur elle-même ou le cordon sur lui-même sur Nbj > 1 tours circonférentiels radialement superposés ou on enroule la bande ou le cordon sur Nbj=1 tour circonférentiel sur M ≥ 1 portion(s) axiale(s) de la couche de produit auto-obturant, j allant de 1 à M,
pour chaque valeur de i allant de 1 à L et pour au moins 50% des valeurs de j allant de 1 à M, de préférence pour 100% des valeurs de j allant de 1 à M, Nbj < Nai.

Dans ce mode de réalisation, dans une variante, Na1=Na2=...NaL et Nb1=Nb2=... NbM et ainsi la relation Nbj < Nai est vérifiée pour chaque valeur de i allant de 1 à L et pour 100% des valeurs de j allant de 1 à M. Dans d'autres variantes, certaines valeurs de Nai pourront être différentes des autres et ce en fonction du compromis d'efficacité et de gain de masse souhaité pour la couche de produit auto-obturant et la relation Nbj < Nai être vérifiée pour chaque valeur de i et pour au moins 50% des valeurs de j, de préférence pour 100% des valeurs de j dans les cas où l'on souhaite maximiser le gain en masse. De façon analogue et pour la même raison, certaines valeurs de Nbj pourront être différentes des autres.

Dans des modes de réalisation préférés, pour chaque valeur de i allant de 1 à L, au moins 50% des valeurs de j allant de 1 à M, de préférence 75% des valeurs de j allant de 1 à M et plus préférentiellement 100% des valeurs de j allant de 1 à M sont telles que Nai/Nbj ≥ 1,20, de préférence Nai/Nbj ≥ 1,50, plus préférentiellement Nai/Nbj ≥ 1,75 et encore plus préférentiellement Nai/Nbj ≥ 2,00. Pour une valeur de Nai donnée, plus le rapport Nai/Nbj est élevé, plus l'épaisseur de la portion axiale comprenant Nbj tours circonférentiels est réduite et plus le gain en masse est important. Pour une valeur de Nbj donnée, plus le rapport Nai/Nbj est élevé, plus l'épaisseur de la portion axiale comprenant Nai tours circonférentiels est importante, ce qui favorise l'efficacité de l'obturation d'un éventuel orifice dans la ou les portions axiales de la bande de roulement à fort risque de perforation.

Dans certains modes de réalisation, pour chaque valeur de i allant de 1 à L, au moins 50% des valeurs de j allant de 1 à M, de préférence 75% des valeurs de j allant de 1 à M et plus préférentiellement 100% des valeurs de j allant de 1 à M sont telles que Nai/Nbj ≤ 3,00, de préférence Nai/Nbj ≤ 2,75 et plus préférentiellement Nai/Nbj ≤ 2,50. Pour une valeur de Nai donnée, plus le rapport Nai/Nbj est petit, plus l'épaisseur de la portion axiale comprenant Nbj tours circonférentiels est importante et plus l'efficacité de l'obturation d'un éventuel orifice dans la ou chaque portion axiale à faible risque de perforation qui, même s'il est relativement réduit, existe quand même, est améliorée. Pour une valeur de Nbj donnée, plus le rapport Nai/Nbj est petit, plus l'épaisseur de la portion axiale comprenant Nai tours circonférentiels est réduite, ce qui permet de réduire la masse de produit auto-obturant.

Dans un mode de réalisation, la couche de produit auto-obturant étant délimitée axialement par deux extrémités axiales, on enroule la bande ou le cordon de matériau auto-obturant sans interrompre la bande ou le cordon entre les deux extrémités axiales. Ainsi, on réduit le temps d'application de la couche de produit auto-obturant.

Dans un mode de réalisation également avantageux, la couche de produit auto-obturant étant délimitée axialement par deux extrémités axiales, on démarre l'enroulage de la bande ou du cordon de matériau auto-obturant en partant d'une desdites extrémités axiales et on arrête l'enroulage de la bande ou du cordon de matériau auto-obturant en arrivant à l'autre desdites extrémités axiales.

Un autre objet de l'invention est un pneumatique obtenu par un procédé tel que défini ci-dessus.

La profondeur d'une découpure est, sur un pneumatique neuf, la distance radiale maximale entre le fond de la découpure et son projeté sur le sol lors du roulage du pneumatique. La valeur maximale des profondeurs des découpures est nommée hauteur de sculpture.

Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur d'une découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. La largeur est mesurée sensiblement perpendiculairement aux faces latérales principales.

La largeur axiale d'une découpure est, quant à elle, mesurée selon la direction axiale du pneumatique, par exemple dans un plan de coupe méridien du pneumatique.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

Une découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

Dans le cas d'une découpure circonférentielle située hors du plan médian du pneumatique, les faces latérales sont appelées faces axialement intérieure et face axialement extérieure, la face axialement intérieure étant agencée, à un azimut donné, axialement à l'intérieur de la face axialement extérieure par rapport au plan médian.

Chaque découpure circonférentielle comprend des extrémités axiales axialement intérieure et extérieure. Que ce soit dans le cas d'une découpure circonférentielle dépourvue de chanfrein ou pourvue de chanfrein, chaque extrémité axiale axialement intérieure et extérieure est confondue avec chaque bord axial de la découpure circonférentielle situé sur la surface de roulement et donc au contact d'un sol de roulement.

Dans le cas d'une découpure transversale, les faces latérales sont appelées face d'attaque et face de fuite, la face d'attaque étant celle dont le bord, pour une ligne circonférentielle donnée, entre dans l'aire de contact avant le bord de la face de fuite.

Dans des modes de réalisation, la ou chaque découpure circonférentielle, qu'elle soit principale ou non, est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Dans des modes de réalisation, la ou chaque découpure transversale est munie de chanfreins. En d'autres termes, chaque découpure transversale étant délimitée radialement par des faces d'attaque et de fuite délimitant circonférentiellement ladite découpure transversale et reliées entre elles par une face de fond délimitant radialement vers l'intérieur ladite découpure transversale. Un chanfrein d'une découpure transversale peut être un chanfrein droit ou un chanfrein arrondi. Un chanfrein droit est formé par une face plane inclinée par rapport à la face d'attaque ou de fuite qu'elle prolonge jusqu'au bord d'attaque ou de fuite délimitant circonférentiellement la découpure transversale. Un chanfrein arrondi est formé par une face courbe se raccordant tangentiellement à la face d'attaque ou de fuite qu'elle prolonge. Un chanfrein d'une découpure transversale est caractérisé par une hauteur et une largeur égale respectivement à la distance radiale et à la distance selon une direction perpendiculaire aux faces d'attaque ou de fuite entre le point commun entre la face d'attaque ou de fuite prolongée par le chanfrein et le bord d'attaque ou de fuite délimitant circonférentiellement la découpure transversale.

De façon classique, on détermine les extrémités axiales de la bande de roulement comme les extrémités axiales du pneumatique de la surface de roulement au contact d'un sol de roulage sur un pneumatique non chargé monté sur une jante nominale et gonflé à la pression nominale au sens de la norme de la European Tyre and Rim Technical Organisation ou « ETRTO », 2019. Dans le cas d'une frontière évidente entre la surface de roulement et le reste du pneumatique, les extrémités axiales de la bande de roulement sont simplement déterminées. Dans le cas où la surface de roulement est continue avec les surfaces externes des flancs du pneumatique, chaque extrémité axiale de la bande de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques sont, dans des modes de réalisation préférés de l'invention, destinés à des véhicule de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019 telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section nominale S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Dans certains modes de réalisation, la couche de produit auto-obturant comprend :
- au moins une portion axiale dite épaisse et au moins une portion axiale dite mince, et/ou
- au moins deux portions axiales épaisse(s) et/ou mince(s) séparées axialement l'une de l'autre par une portion axiale présentant une épaisseur nulle de produit auto-obturant, étant entendu que :
- la ou chaque portion axiale épaisse étant axialement délimitée par deux points d'inflexion adjacents de la courbe de surface radialement intérieure de la couche de produit auto-obturant, l'épaisseur de ladite portion axiale épaisse augmentant en se déplaçant axialement vers l'intérieur de ladite portion axiale épaisse depuis chacun desdits points d'inflexion,
- la ou chaque portion axiale mince étant axialement délimitée par deux points d'inflexion adjacents de la courbe de surface radialement intérieure de la couche de produit auto-obturant, l'épaisseur de ladite portion axiale mince:
   diminue en se déplaçant axialement vers l'intérieur de ladite portion axiale mince depuis chacun desdits points d'inflexion, ou
   diminue en se déplaçant axialement vers l'intérieur de ladite portion axiale mince depuis un desdits point d'inflexion et augmente en se déplaçant axialement vers l'intérieur de ladite portion axiale mince depuis l'autres desdits point d'inflexion.

Dans la deuxième alternative de ces modes de réalisation, pourra avoir deux portions axiales épaisses séparées axialement l'une de l'autre par une portion axiale présentant une épaisseur nulle de produit auto-obturant ou bien deux portions axiales minces séparées axialement l'une de l'autre par une portion axiale présentant une épaisseur nulle de produit auto-obturant ou bien encore une portion axiale épaisse et une portion axiale mince séparées axialement l'une de l'autre par une portion axiale présentant une épaisseur nulle de produit auto-obturant.

Par point d'inflexion, on désigne un point où, dans un plan de coupe méridien, le sens de la courbure de la courbe de surface radialement intérieure de la couche de produit auto-obturant change. On désigne égale un point d'arrêt de la courbe de surface radialement intérieure de la couche de produit auto-obturant au contact de la couche d'étanchéité. La largeur axiale de la ou de chaque portion axiale épaisse est la distance selon la direction axiale, par exemple mesurée dans un plan de coupe méridien, entre les deux points d'inflexion.

L'invention permet d'envisager des modes de réalisation dans laquelle la couche de produit auto-obturant s'étend circonférentiellement de façon discontinue ou continue sur tout ou partie de la longueur circonférentielle de la couche de produit auto-obturant. De façon préférée et afin de garantir une efficacité élevée de la couche de produit auto-obturant contre les perforations, chaque portion axiale épaisse et mince s'étend circonférentiellement continûment sur au moins 50%, de préférence au moins 75% et plus préférentiellement sur au moins 95% et idéalement sur 100% de la longueur circonférentielle de la couche de produit auto-obturant.

L'invention permet également d'envisager des portions axiales de la couche de produit auto-obturant qui présente des épaisseurs variables selon la direction circonférentielle. Néanmoins, afin de maximiser le gain en masse et de garantir une efficacité uniforme de la couche de produit auto-obturant, l'épaisseur moyenne de chaque portion axiale épaisse et mince est circonférentiellement sensiblement constante sur au moins 50%, de préférence sur au moins 75% et plus préférentiellement sur au moins 95% de la longueur circonférentielle de la couche de produit auto-obturant.

Dans un mode de réalisation, on prévoit que l'épaisseur de la couche de produit auto-obturant varie entre une épaisseur moyenne relativement importante lorsqu'on se situe au droit d'une portion axiale à haut risque de perforation et une épaisseur moyenne relativement réduite lorsqu'on se situe au droit d'une portion axiale à moindre risque de perforation. Ainsi, la couche de produit auto-obturant comprenant L ≥ 1 portion(s) axiale(s) épaisse(s) et M ≥ 1 portion(s) axiale(s) mince(s), la ou chaque portion axiale épaisse présentant une épaisseur moyenne EEm pour m allant de 1 à L et la ou chaque portion axiale mince présentant une épaisseur moyenne EMn pour n allant de 1 à M, pour chaque valeur de m allant de 1 à L et pour au moins 50% des valeurs de n allant de 1 à M, de préférence pour 100% des valeurs de n allant de 1 à M, EMn < EEim

Chaque épaisseur moyenne EE, EM de la portion axiale de la couche de produit auto-obturant est mesurée en faisant, dans plusieurs plans de coupe méridiens, une moyenne des épaisseurs de la couche de produit auto-obturant entre les points d'inflexion définissant les extrémités axiales de ladite portion axiale de la couche de produit auto-obturant, les épaisseurs étant mesurées par exemple tous les millimètres. Dans le cas préféré où l'épaisseur moyenne est sensiblement constante circonférentiellement, on prendra un nombre réduit de plans de coupe méridiens. Dans le cas où l'épaisseur moyenne est non constante circonférentiellement, on prendra un nombre significatif de plans de coupe méridiens, par exemple seize, et on fera la moyenne des épaisseurs mesurée dans tous les plans de coupe méridiens. L'épaisseur mesurée en un point est évidemment la distance droite la plus courte séparant la surface radialement extérieure et la surface radialement intérieure de la couche de produit auto-obturant passant par ce point. On notera que les coupes dans les plans de coupe méridiens sont réalisées sans détériorer la couche de produit auto-obturant afin de mesurer précisément les différentes grandeurs géométriques, notamment les épaisseurs. On utilisera notamment des procédés de découpure par jet d'eau à très haute pression.

Dans des pneumatiques pour véhicule de tourisme et pour véhicule utilitaire décrits précédemment, chaque épaisseur moyenne EE va avantageusement de 2,0 mm à 5,0 mm, de préférence de 2,5 mm à 4,5 mm et l'épaisseur moyenne EM va avantageusement de 0,5 mm à 4,0 mm, de préférence de 1,0 mm à 3,0 mm.

Dans certains modes de réalisation permettant, comme indiqué plus haut, de favoriser le gain en masse et l'efficacité de l'obturation d'un éventuel orifice dans chaque portion axiale à haut risque de perforation, pour chaque valeur de m allant de 1 à L, au moins 50% des valeurs de n allant de 1 à M, de préférence 75% des valeurs de n allant de 1 à M et plus préférentiellement 100% des valeurs de n allant de 1 à M sont telles que EEm ≥ 1,10 x EMn, de préférence EEm ≥ 1,30 x EMn et plus préférentiellement EEm ≥ 1,50 x EMn.

Dans d'autres modes de réalisation permettant, comme indiqué plus haut, de favoriser le gain en masse et l'efficacité de l'obturation d'un éventuel orifice dans la ou chaque portion axiale à moindre risque de perforation, pour chaque valeur de m allant de 1 à L, au moins 50% des valeurs de n allant de 1 à M, de préférence 75% des valeurs de n allant de 1 à M et plus préférentiellement 100% des valeurs de n allant de 1 à M sont telles que EEm ≤ 5,00 x EMn, de préférence EEm ≤ 4,00 x EMn et plus préférentiellement EEm ≤ 2,50 x EMn.

Dans un mode de réalisation, la bande de roulement comprend :
- au moins une découpure circonférentielle, dite principale, présentant une profondeur Ha telle que Ha/Hs ≥ 50%, de préférence Ha/Hs ≥ 75% et plus préférentiellement Ha/Hs ≥ 90%,
- au moins une nervure,

la ou une des portions axiale épaisse est agencée au moins en partie au droit de la ou chaque découpure circonférentielle,
la ou une des portions axiale mince est agencée au moins en partie au droit de la ou chaque nervure.

Dans ce mode de réalisation, les inventeurs à l'origine de l'invention ont déterminé que des portions axiales de la bande de roulement à haut risque de perforation étaient celles présentant une épaisseur de bande de roulement relativement faible. De telles portions axiales de la bande de roulement sont celles comprenant les découpures circonférentielles principales présentant une profondeur au moins égale à la moitié de la hauteur de sculpture. Ainsi, ce mode de réalisation prévoit qu'une portion axiale épaisse de la couche de produit auto-obturant soit agencée au moins en partie au droit de ces découpures circonférentielles principales ce qui permet de garantir une efficacité élevée de la couche de produit auto-obturant contre les perforations ayant lieu dans les découpures circonférentielles principales.

Afin d'alléger le pneumatique, les inventeurs ont déterminé que les nervures du pneumatique, qui présentent une épaisseur de bande de roulement plus grande que celle située radialement à l'intérieur des découpures circonférentielles principales, sont des portions axiales à moindre risque de perforation. En effet, d'une part, l'épaisseur de la bande de roulement protège le pneumatique d'une perforation dans le cas où l'objet perforant est relativement court et, d'autre part, une épaisseur relativement grande de la bande de roulement oppose une résistance à la perforation supérieure par rapport à une épaisseur relativement petite. Ainsi, ce mode de réalisation prévoit qu'une portion axiale mince de la couche de produit auto-obturant soit agencée au moins en partie au droit des nervures ce qui permet d'alléger significativement le pneumatique.

La portion axiale de la couche de produit auto-obturant agencée au droit d'une découpure circonférentielle principale ou d'une nervure de la bande de roulement est la portion axiale de produit auto-obturant délimitée par extrémités axiales définies par deux plans circonférentiels perpendiculaires à l'axe de rotation du pneumatique et passant respectivement par les extrémités axiales de la découpure circonférentielle principale ou de la nervure. Ainsi, dans le cas où une portion axiale épaisse de la couche de produit auto-obturant présente une largeur axiale supérieure à la largeur axiale de la découpure circonférentielle principale, seulement une partie de la portion axiale épaisse de la couche de produit auto-obturant est située au droit de la découpure circonférentielle principale. Dans le cas où une portion axiale épaisse de la couche de produit auto-obturant présente une largeur axiale inférieure à la largeur axiale de la découpure circonférentielle principale, l'intégralité de la portion axiale épaisse de la couche de produit auto-obturant est située au droit de la découpure circonférentielle principale. De façon analogue, dans le cas où une portion axiale mince de la couche de produit auto-obturant présente une largeur axiale supérieure à la largeur axiale de la nervure, seulement une partie de la portion axiale mince de la couche de produit auto-obturant est située au droit de la nervure. Dans le cas où une portion axiale mince de la couche de produit auto-obturant présente une largeur axiale inférieure à la largeur axiale de la nervure, l'intégralité de la portion axiale mince de la couche de produit auto-obturant est située au droit de la nervure.

La ou chaque découpure circonférentielle est dite principale en raison de sa profondeur Ha relativement importante par rapport à d'autres découpures circonférentielles complémentaires qui pourraient optionnellement être présentes sur la bande de roulement du pneumatique et qui présenteraient une profondeur relativement faible et donc engendrant un risque de perforation plus faible.

Dans des modes de réalisation dans lesquels les découpures circonférentielles principales sont des rainures circonférentielles principales relativement larges, notamment dans le cas de pneumatiques pour véhicule de tourisme et pour véhicule utilitaire, et présentent un risque très élevé de subir une perforation et donc dans lesquels l'invention est particulièrement avantageuse, la ou chaque découpure circonférentielle principale présente une largeur axiale supérieure ou égale à 1,0 mm, de préférence supérieure ou égale à 5,0 mm et plus préférentiellement supérieure ou égale à 8,0 mm et encore plus préférentiellement allant de 8,0 mm à 20,0 mm.

Dans des modes de réalisation dans lesquels les découpures circonférentielles principales sont relativement profondes, notamment dans le cas de pneumatiques pour véhicule de tourisme et pour véhicule utilitaire, et présentent un risque très élevé de subir une perforation et donc dans lesquels l'invention est particulièrement avantageuse, la ou chaque découpure circonférentielle principale présente une profondeur allant de 4,0 mm à la hauteur de sculpture, de préférence allant de 5,0 mm à la hauteur de sculpture et plus préférentiellement allant de 5,5 mm à la hauteur de sculpture.

Avantageusement, la ou chaque nervure est axialement délimitée par une extrémité axialement intérieure et par une extrémité axialement extérieure, chaque extrémité axialement intérieure et extérieure étant choisie parmi :
- une extrémité axiale de la bande de roulement, et
- une extrémité axialement intérieure ou extérieure de la ou des découpure(s) circonférentielle(s) principale(s),
les extrémités axialement intérieure et extérieure de la nervure étant des extrémités adjacentes l'une à l'autre.

Avantageusement, la couche de produit auto-obturant présente, à proximité de la découpure circonférentielle principale, une largeur axiale significative par rapport à la largeur axiale de la découpure circonférentielle principale pour pouvoir obturer efficacement un éventuel orifice. Ainsi, la largeur axiale Wx de la ou chaque portion axiale épaisse est telle que Wx/Lax ≥ 0,50, de préférence Wx/Lax > 1,00 avec Lax étant la largeur axiale de la découpure circonférentielle principale au droit de laquelle est agencée au moins en partie ladite portion axiale épaisse.

Ainsi, comme défini ci-dessus, la portion axiale épaisse peut présenter une largeur axiale inférieure à la largeur axiale de la découpure circonférentielle principale, mais néanmoins suffisante pour permettre d'obturer efficacement un éventuel orifice. Dans ce cas, la portion axiale épaisse est confondue avec une partie de la portion axiale de la couche de produit auto-obturant s'étendant au droit de la découpure circonférentielle principale. La portion axiale épaisse peut également présenter, de façon préférée, une largeur axiale supérieure ou égale à la largeur axiale de la découpure circonférentielle principale. Dans ce cas, une partie de la portion axiale épaisse est confondue avec la portion axiale de la couche de produit auto-obturant s'étendant au droit de la découpure circonférentielle principale.

Avantageusement, Wx/Lax ≤ 4,00, de préférence Wx/Lax ≤ 3,00, plus préférentiellement Wx/Lax ≤ 2,00, encore plus préférentiellement Wx/Lax ≤ 1,50 et très préférentiellement Wx/Lax ≤ 1,25. Afin de ne pas trop alourdir le pneumatique, il est préférable de ne pas prévoir une portion axiale épaisse axialement trop large sauf si cela s'avère préférable pour optimiser la performance anti-crevaison, notamment aux épaules du pneumatique. Ainsi, les portions axiales épaisses correspondant aux découpures circonférentielles principales les plus axialement extérieures pourront ne pas vérifier les conditions précédentes alors que les autres portions axiales épaisses correspondant aux autres découpures circonférentielles principales pourront les vérifier.

Dans le cas d'une nervure délimitée axialement par une extrémité axiale de la bande de roulement et une extrémité axialement intérieure ou extérieure d'une découpure circonférentielle principale, on parlera généralement d'une nervure latérale car située dans une portion latérale de la bande de roulement. Dans le cas d'une nervure délimitée axialement par une extrémité axialement intérieure (ou extérieure) d'une découpure circonférentielle principale et par une extrémité adjacente axialement extérieure (ou intérieure) d'une autre découpure circonférentielle principale, on parlera généralement d'une nervure centrale car située dans une portion centrale de la bande de roulement.

Par extrémités adjacentes, on comprendra qu'aucune extrémité axialement intérieure ou extérieure d'une découpure circonférentielle principale n'est axialement agencée entre les extrémités adjacentes.

Dans un autre mode de réalisation, la bande de roulement comprend :
- au moins une nervure, dite profondément découpée, comprenant au moins une découpure transversale présentant une profondeur Ht telle que Ht/Hs ≥ 50%, avec Hs étant la hauteur de sculpture,
- au moins une nervure, dite non ou faiblement découpée, dépourvue de découpures transversales ou comprenant des découpures transversales satisfaisant chacune, pour au moins 50%, de préférence pour au moins 75% et plus préférentiellement pour 100% du nombre de découpures transversales de la ou chaque nervure faiblement découpée, au moins une des conditions suivantes :
- la découpure transversale de la nervure faiblement découpée présente une largeur strictement inférieure à 1,6 mm de préférence strictement inférieure à 1,0 mm et plus préférentiellement strictement inférieure à 0,7 mm,
- la découpure transversale de la nervure faiblement découpée présente une profondeur H telle que H/Hs < 50%, de préférence H/Hs ≤ 30%,

la ou une des portions axiale épaisse est agencée au moins en partie au droit de la nervure profondément découpée,
la ou une des portions axiale mince agencée au moins en partie au droit de la nervure non ou faiblement découpée.

Les inventeurs à l'origine de l'invention ont déterminé que des portions axiales de la bande de roulement à haut risque de perforation étaient celles les nervures dans lesquelles étaient ménagées les découpures transversales les plus profondes. Ces portions axiales comprennent les découpures transversales présentant une profondeur au moins égale à la moitié de la hauteur de sculpture. Ainsi, l'invention prévoit qu'une portion axiale épaisse de la couche de produit auto-obturant soit agencée au moins en partie au droit de ces nervures profondément découpées ce qui permet de garantir une efficacité élevée de la couche de produit auto-obturant contre les perforations ayant lieu dans ces nervures profondément découpées.

Afin d'alléger le pneumatique, les inventeurs ont déterminé que les nervures peu ou faiblement découpées sont des portions axiales à moindre risque de perforation. En effet, dans le cas d'une nervure non découpée, une épaisseur relativement grande de la bande de roulement oppose une résistance à la perforation supérieure par rapport à une épaisseur relativement petite. Dans le cas d'une nervure faiblement découpée comprenant des découpures transversales peu profondes, d'une part, l'épaisseur de la bande de roulement protège le pneumatique d'une perforation dans le cas où l'objet perforant est relativement court et, d'autre part, une épaisseur relativement grande de la bande de roulement oppose une résistance à la perforation supérieure par rapport à une épaisseur relativement petite. De plus, dans le cas d'une nervure faiblement découpée comprenant des découpures transversales peu larges, la probabilité qu'un objet perforant vienne s'y loger est relativement faible. Ainsi, l'invention prévoit qu'une portion axiale mince de la couche de produit auto-obturant soit agencée au moins en partie au droit des nervures non ou faiblement découpées ce qui permet d'alléger significativement le pneumatique.

Dans des modes de réalisation dans lesquels les découpures transversales de la ou chaque nervure profondément découpée sont relativement larges, notamment dans le cas de pneumatiques pour véhicule de tourisme et pour véhicule utilitaire, et présentent un risque élevé de subir une perforation et donc dans lesquels l'invention est particulièrement avantageuse, la ou chaque découpure transversale de la ou chaque nervure profondément découpée présente une largeur supérieure ou égale à 0,7 mm, de préférence supérieure ou égale à 1,0 mm et plus préférentiellement supérieure ou égale à 1,6 mm.

Dans des modes de réalisation dans lesquels les découpures transversales de la ou chaque nervure profondément découpée sont relativement profondes, notamment dans le cas de pneumatiques pour véhicule de tourisme et pour véhicule utilitaire, et présentent un risque élevé de subir une perforation et donc dans lesquels l'invention est particulièrement avantageuse, la ou chaque découpure transversale de la ou chaque nervure profondément découpée présente une profondeur allant de 2,0 mm à la hauteur de sculpture, de préférence allant de 4,0 mm à la hauteur de sculpture et plus préférentiellement allant de 5,0 mm à la hauteur de sculpture.

Avantageusement, chaque nervure profondément découpée et chaque nervure non ou faiblement découpée est axialement délimitée par une extrémité axialement intérieure et par une extrémité axialement extérieure, chaque extrémité axialement intérieure et extérieure étant choisie parmi :
- une extrémité axiale de la bande de roulement, et
- une extrémité axialement intérieure ou extérieure d'une découpure circonférentielle, dite principale, présentant une profondeur Ha telle que Ha/Hs ≥ 50%, de préférence Ha/Hs ≥ 75% et plus préférentiellement Ha/Hs ≥ 90%,
les extrémités axialement intérieure et extérieure de la nervure étant des extrémités adjacentes l'une à l'autre.

Dans le cas d'une nervure délimitée axialement par une extrémité axiale de la bande de roulement et une extrémité axialement intérieure ou extérieure d'une découpure circonférentielle principale, on parlera généralement d'une nervure latérale car située dans une portion latérale de la bande de roulement. Dans le cas d'une nervure délimitée axialement par une extrémité axialement intérieure (ou extérieure) d'une découpure circonférentielle principale et par une extrémité adjacente axialement extérieure (ou intérieure) d'une autre découpure circonférentielle principale, on parlera généralement d'une nervure centrale car située dans une portion centrale de la bande de roulement.

Par extrémités adjacentes, on comprendra qu'aucune extrémité axialement intérieure ou extérieure d'une découpure circonférentielle principale n'est axialement agencée entre les extrémités adjacentes.

Avantageusement, la couche de produit auto-obturant présente, à proximité de la nervure profondément découpée, une largeur axiale significative par rapport à la largeur axiale de chaque nervure profondément découpée pour pouvoir obturer efficacement un éventuel orifice. Ainsi, la largeur axiale Wy de la ou chaque portion axiale épaisse est telle que Wy/Lcy ≥ 0,50, de préférence Wy/Lcy > 1,00 avec Lcy étant la largeur axiale de la nervure profondément découpée au droit de laquelle est agencée au moins en partie ladite portion axiale épaisse.

Ainsi, comme défini ci-dessus, la portion axiale épaisse peut présenter une largeur axiale inférieure à la largeur axiale de la nervure profondément découpée, mais néanmoins suffisante pour permettre d'obturer efficacement un éventuel orifice. Dans ce cas, la portion axiale épaisse est confondue avec une partie de la portion axiale de la couche de produit auto-obturant s'étendant au droit de la nervure profondément découpée. La portion axiale épaisse peut également présenter, de façon préférée, une largeur axiale supérieure ou égale à la largeur axiale de la nervure profondément découpée. Dans ce cas, une partie de la portion axiale épaisse est confondue avec la portion axiale de la couche de produit auto-obturant s'étendant au droit de la nervure profondément découpée.

Afin de maximiser l'efficacité de la couche de produit auto-obturant sur la très grande majorité de la largeur axiale de la bande de roulement, chaque extrémité axialement extérieure de la couche de produit auto-obturant est agencée à une distance axiale inférieure ou égale à 20%, de préférence inférieure ou égale à 10% de la largeur de la bande de roulement par rapport à respectivement chaque extrémité de la bande de roulement, de préférence axialement à l'intérieur de chaque extrémité axiale de la bande de roulement.

De façon conventionnelle, le pneumatique comprend un sommet, deux flancs, deux bourrelets, chaque flanc reliant chaque bourrelet au sommet. Toujours de façon conventionnelle, le sommet comprend la bande de roulement et une armature de sommet agencée radialement à l'intérieur de la bande de roulement. Le pneumatique comprend également une armature de carcasse ancrée dans chaque bourrelet et s'étendant radialement dans chaque flanc et axialement dans le sommet radialement intérieurement à l'armature de sommet.

De façon conventionnelle, l'armature de sommet comprend au moins une couche de sommet comprenant des éléments de renforcement. Ces éléments de renforcement sont préférentiellement des éléments filaires textiles ou métalliques.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien parallèle à l'axe de rotation du pneumatique, d'un pneumatique selon un premier mode de réalisation de l'invention,
- la figure 2 est une vue de dessus de la bande de roulement du pneumatique de la figure 1,
- la figure 3 est une vue, dans un plan de coupe méridien parallèle à l'axe de rotation du pneumatique, illustrant le procédé de fabrication du pneumatique de la figure 1, et
- la figure 4 est une vue analogue à celle de la figure 1 d'un pneumatique selon un deuxième mode de réalisation de l'invention.

Dans les figures relatives au pneumatique, on a représenté un repère X, Y, Z correspondant aux directions habituelles respectivement axiale (Y), radiale (Z) et circonférentielle (X) d'un pneumatique.

Dans la description qui suit, les mesures réalisées sont réalisées sur un pneumatique non chargé et non gonflé ou sur une coupe de pneumatique dans un plan méridien.

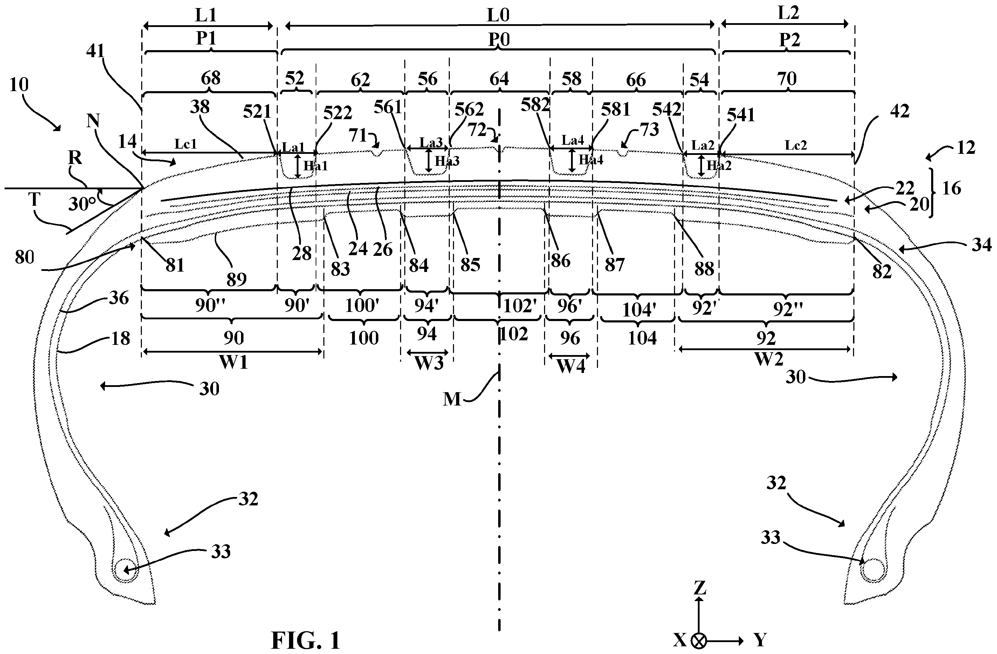

On a représenté sur la figure 1 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 245/45 R18. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22. L'armature de travail 16 comprend au moins une couche de travail et ici comprend deux couches de travail comprenant une couche de travail 24 radialement intérieure agencée radialement à l'intérieur d'une couche de travail 26 radialement extérieure.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour d'une tringle 33. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36.

Chaque couche de travail 24, 26 de frettage 28 et de carcasse 36 comprend une matrice élastomérique dans laquelle sont noyés un ou des éléments de renfort filaires de la couche correspondante.

L'armature de frettage 22, ici la couche de frettage 28, comprend un ou plusieurs éléments de renfort filaires de frettage enroulés circonférentiellement hélicoïdalement selon une direction principale formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 comprend des éléments de renfort filaires de travail s'étendant selon des directions principales formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 15° à 30°. Ici, AT1=-26° et AT2=+26°.

La couche de carcasse 36 comprend des éléments de renfort filaires de carcasse s'étendant selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans cette variante, on aura AT1=-29° et AT2=+29°

Chaque élément de renfort filaire de travail est un assemblage de deux monofilaments en acier enroulés en hélice au pas de 14 mm, chaque monofilament en acier présentant un diamètre égal à 0,30 mm. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S. Dans une autre variante, chaque élément de renfort filaire de travail est constitué d'un monofilament en acier présentant un diamètre égal à 0,30 mm. D'une manière plus générale, les monofilaments en acier présentent des diamètres allant de 0,25 mm à 0,32 mm.

Chaque élément de renfort filaire de carcasse comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex et des torsions égales à 420 tours par mètre ou des titres égaux à 334 tex et des torsions égales à 270 tours par mètre.

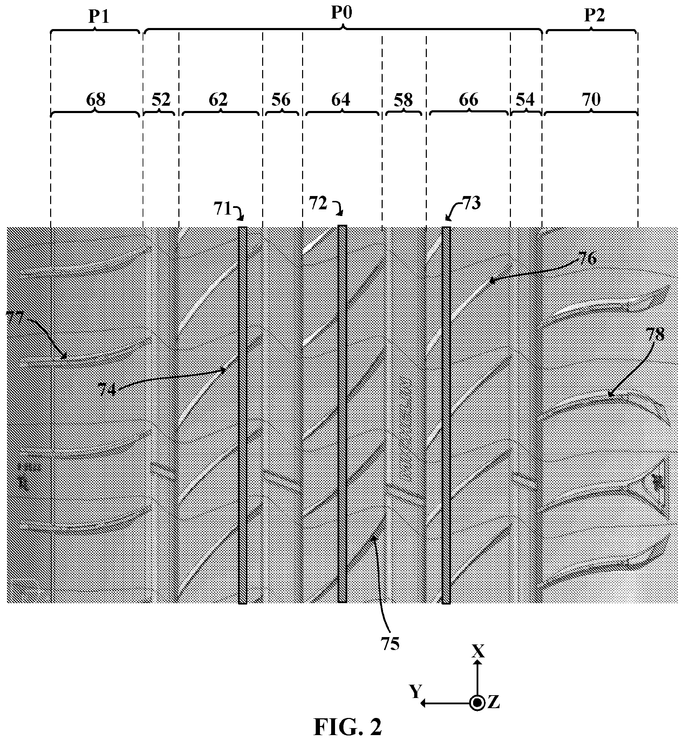

En référence aux figures 1 et 2, la bande de roulement 14 comprend une surface de roulement 38 par l'intermédiaire de laquelle la bande de roulement 14 entre en contact avec le sol. La surface de roulement 38 est destinée à entrer en contact avec le sol lors du roulage du pneumatique 10 sur le sol. La bande de roulement est délimitée axialement par des premier et deuxième bords axiaux 41, 42 passant par chaque point N agencé de part et d'autre du plan médian M et pour lequel l'angle entre la tangente T à la surface de roulement 38 et une droite parallèle R à la direction axiale Y passant par ce point est égal à 30°.

La bande de roulement 14 comprend une portion axialement centrale P0 et des première et deuxième portions axialement latérales P1, P2 agencées axialement à l'extérieur de la portion axialement centrale P0 de part et d'autre axialement de la portion axialement centrale P0 par rapport au plan médian M du pneumatique 10.

Sans que cela soit spécifique au mode de réalisation illustré, la portion axialement centrale P0 présente une largeur axiale L0 supérieure ou égale à 50%, de préférence supérieure ou égale à 60% et inférieure ou égale à 80%, de préférence inférieure ou égale à 70% de la largeur axiale L de la surface de roulement 38 du pneumatique 10 à l'état neuf. Chaque première et deuxième portion axialement latérale P1, P2 présente une largeur axiale L1, L2 inférieure ou égale à 25%, de préférence inférieure ou égale à 20% et supérieure ou égale à 5%, de préférence supérieure ou égale à 10% de la largeur axiale L de la surface de roulement 38 du pneumatique 10 à l'état neuf. Le rapport de la largeur axiale L0 de la portion centrale P0 sur la largeur axiale L1, L2 de chaque première et deuxième portion axialement latérale P1, P2 est supérieur ou égale à 3,0, de préférence va de 3,0 à 5,0 et plus préférentiellement va de 4,0 à 4,5. Ici, L0=140 mm, L1=L2=33 mm.

La portion axialement centrale P0 comprend N>1 des découpures circonférentielles principales, ici N rainures circonférentielles principales, comprenant des première, deuxième, troisième et quatrième découpures circonférentielles principales respectivement désignées par les références 52, 54, 56, 58. Les première et deuxième découpures circonférentielles principales 52, 54 sont agencées axialement de part et d'autre du plan médian M du pneumatique 10 et sont les découpures circonférentielles principales axialement les plus extérieures de la bande de roulement 14.

Chaque découpure circonférentielle principale 52 à 58 est axialement délimitée par une extrémité axialement extérieure respectivement désignée par la référence 521, 541, 561, 581 et par une extrémité axialement intérieure respectivement désignée par la référence 522, 542, 562, 582. La portion axialement centrale P0 s'étend axialement depuis l'extrémité axialement extérieure 521 de la première découpure circonférentielle principale 52 jusqu'à l'extrémité axialement extérieure 541 de la deuxième découpure circonférentielle principale 54.

Chaque découpure circonférentielle principale 52, à 58 présente une profondeur respectivement désignée par la référence Ha1, Ha2, Ha3, Ha4 et allant de 4,0 mm à la hauteur de sculpture Hs, de préférence allant de 5,0 mm à la hauteur de sculpture Hs et plus préférentiellement allant de 5,5 mm à la hauteur de sculpture Hs. Chaque profondeur Ha1, Ha2, Ha3, Ha4 est supérieure ou égale à 50% de la hauteur de sculpture Hs. Ici, Hs=Ha3=Ha4=6,5 mm et Ha1=Ha2=6,0 mm. Ainsi, chaque découpure circonférentielle principale 52, 54, 56, 58 est telle que Hai/Hs ≥ 75% et ici telle que Hai/Hs ≥ 90% avec i allant de 1 à 4 car Hs=6,5 mm.

Chaque découpure circonférentielle principale 52 à 58 présente une largeur axiale respectivement désignée par la référence La1, La2, La3, La4 et supérieure ou égale à 1,0 mm, de préférence supérieure ou égale à 5,0 mm et plus préférentiellement supérieure ou égale à 8,0 mm et encore plus préférentiellement allant de 8,0 mm à 20,0 mm. Ici, La1=La2=10,0 mm et La3=La4=12,5 mm.

La portion axialement centrale P0 comprend Q=N-1≥1 nervures centrales et ici des première, deuxième et troisième nervures centrales respectivement désignées par les références 62, 64, 66. Chaque nervure centrale 62, 64, 66 est agencée axialement entre deux des découpures circonférentielles principales adjacentes 52 à 58 et est délimitée axialement par deux découpures circonférentielles principales adjacentes 52 à 58.

Chaque nervure centrale 62, 64, 66 est axialement délimitée par une extrémité axialement intérieure et par une extrémité axialement extérieure, chaque extrémité axialement intérieure et extérieure étant une extrémité axialement intérieure ou extérieure des découpures circonférentielles principales 52 à 58. Les extrémités axialement intérieure et extérieure de chaque nervure centrale 62, 64, 66 sont adjacentes l'une à l'autre. En l'espèce, la première nervure centrale 62 est axialement délimitée par l'extrémité axialement intérieure 522 de la première découpure circonférentielle principale 52 et par l'extrémité axialement extérieure 561 de la troisième découpure circonférentielle principale 56. La deuxième nervure centrale 64 est axialement délimitée par l'extrémité axialement intérieure 562 de la troisième découpure circonférentielle principale 56 et par l'extrémité axialement intérieure 582 de la quatrième découpure circonférentielle principale 58. La troisième nervure centrale 66 est axialement délimitée par l'extrémité axialement extérieure 581 de la quatrième découpure circonférentielle principale 58 et par l'extrémité axialement intérieure 542 de la deuxième découpure circonférentielle principale 54.

La portion axialement centrale P0 comprend des découpures circonférentielle complémentaires ménagées dans les nervures centrales 62, 64, 66. Ici, chaque nervure centrale 62, 64, 66 comprend respectivement une découpure circonférentielle complémentaire 71, 72, 73. Chaque découpure circonférentielle complémentaire 71, 72, 73 présente une profondeur strictement inférieure à 50% de la hauteur de sculpture Hs, de préférence inférieure ou égale à 30% de la hauteur de sculpture Hs et plus préférentiellement allant de 10% à 30% de la hauteur de sculpture Hs et ici allant de 1,0 mm à 4,0 mm et ici égale à 2,0 mm. Chaque découpure circonférentielle complémentaire 71, 72, 73 présente respectivement une largeur axiale allant de 4% à 15%, de préférence de 4% à 10% respectivement de chaque largeur axiale de chaque nervure centrale 62, 64, 66 et ici inférieure ou égale à 3,0 mm, de préférence allant de 1,0 mm à 3,0 mm et ici égale à 1,0 mm.

En outre, chaque nervure centrale 62, 64, 66 comprend des découpures transversales 74, 75, 76 satisfaisant, pour au moins 50%, de préférence pour au moins 75% et plus préférentiellement pour 100% du nombre de découpures transversales 74, 75, 76 de chaque nervure centrale 62, 64, 66, au moins une des conditions suivantes :
- la découpure transversale de la nervure centrale présente une largeur strictement inférieure à 1,6 mm, de préférence strictement inférieure à 1,0 mm et plus préférentiellement strictement inférieure à 0,7 mm,
- la découpure transversale de la nervure centrale présente une profondeur H telle que H/Hs < 50%, de préférence H/Hs ≤ 30%.

En l'espèce, chaque nervure centrale 62, 64, 66 comprend des découpures transversales 74, 75, 76 satisfaisant pour 100% du nombre de découpures transversales 74, 75, 76 de chaque nervure centrale 62, 64, 66 la condition selon laquelle chaque découpure transversale 74, 75, 76 présente une largeur strictement inférieure à 0,7 mm. A ce titre, chaque nervure centrale 62, 64, 66 est dite faiblement découpée.

La première portion axialement latérale P1 s'étend axialement depuis la première extrémité axiale 41 de la bande de roulement 14 jusqu'à l'extrémité axialement extérieure 521 de la première découpure circonférentielle principale 52. La deuxième portion axialement latérale P2 s'étend axialement depuis la deuxième extrémité axiale 42 de la bande de roulement 14 jusqu'à l'extrémité axialement extérieure 541 de la deuxième découpure circonférentielle principale 54.

Chaque première et deuxième portion axialement latérale P1, P2 comprend respectivement une première et une deuxième nervure latérale respectivement désignées par les références 68, 70 et ici est constituée respectivement par chaque première et deuxième nervure latérale 68, 70. Le pneumatique 10 comprend donc P=2>1 nervures latérales. Ainsi, la première nervure latérale 68 est axialement délimitée par deux extrémités adjacentes l'une à l'autre, ici par l'extrémité axiale 41 de la bande de roulement 14 et l'extrémité axialement extérieure 521 de la première découpure circonférentielle principale 52. La deuxième nervure latérale 70 est axialement délimitée par deux extrémités adjacentes l'une à l'autre, ici par l'extrémité axiale 42 de la bande de roulement 14 et l'extrémité axialement extérieure 541 de la deuxième découpure circonférentielle principale 54. Chaque première et deuxième nervure latérale 68, 70 présente une largeur axiale respectivement désignée par la référence Lc1, Lc2 avec ici Lc1=Lc2=33 mm.

Chaque première et deuxième nervure latérale 68, 70 comprend des découpures transversales 77, 78 présentant une profondeur Ht telle que Ht/Hs ≥ 50%, de préférence Ht/Hs ≥ 75%, de préférence Ht/Hs ≥ 90%. Chaque découpure transversale 77, 78 présente une profondeur Ht allant de 2,0 mm à la hauteur de sculpture Hs, de préférence allant de 4,0 mm à la hauteur de sculpture Hs et plus préférentiellement allant de 5,0 mm à la hauteur de sculpture Hs et ici Ht=6,0 mm. Chaque découpure transversale 77, 78 présente une largeur supérieure ou égale à 0,7 mm de préférence supérieure ou égale à 1,0 mm et plus préférentiellement supérieure ou égale à 1,6 mm. A ce titre, chaque nervure latérale 68, 70 est dite profondément découpée.

En référence à la figure 1, le pneumatique 10 comprend également une couche 80 d'un produit auto-obturant s'étendant circonférentiellement radialement à l'intérieur d'une partie de la couche interne d'étanchéité 18 et au moins en partie au droit de la bande de roulement 14. Le produit auto-obturant est connu de l'état de la technique et pourra être choisi notamment parmi les produits décrits dans les documents WO2020009849, WO2011092122, WO2011092123. La couche de produit auto-obturant est délimitée axialement par deux extrémités axiales 81, 82 agencée respectivement à une distance axiale inférieure ou égale à 20%, de préférence inférieure ou égale à 10% de la largeur axiale de la bande de roulement par rapport à respectivement chaque extrémité axiale 41, 42 de la bande de roulement 14. En l'espèce, chaque extrémité axiale 81, 82 est radialement alignée respectivement avec chaque extrémité 41, 42 même si on préfèrera les modes de réalisation dans lesquels chaque extrémité axiale 81, 82 est agencée axialement à l'intérieur de chaque extrémité axiale 81, 82.

La couche de produit auto-obturant 80 comprend L≥1, ici L=4>1 portions axiales dites épaisses et ici désignées par les références 90, 92, 94, 96 ainsi que M≥1, ici M=3>1 portions axiales dites minces et ici désignées par les références 100, 102, 104. Comme illustré sur la figure 1, chaque portion axiale épaisse et mince est délimitée par deux points d'inflexion 81, 82, 83, 84, 85, 86, 87, 88 de la courbe de surface 89 radialement intérieure de la couche de produit auto-obturant. Chaque portion axiale épaisse 90 à 96 est axialement délimitée par deux points d'inflexion adjacents de sorte que l'épaisseur de chaque portion axiale épaisse 90 à 96 augmente en se déplaçant axialement vers l'intérieur de chaque portion axiale épaisse 90 à 96 depuis chacun desdits points d'inflexion. Chaque portion axiale mince 100 à 104 est axialement délimitée par deux points d'inflexion adjacents de sorte que l'épaisseur de chaque portion axiale mince 100 à 104 diminue en se déplaçant axialement vers l'intérieur de ladite portion axiale mince 100 à 104 depuis chacun desdits points d'inflexion.

Chaque portion axiale épaisse 90 à 96 et mince 100 à 104 s'étend circonférentiellement continûment sur au moins 50%, de préférence au moins 75% et plus préférentiellement sur au moins 95% et ici sur 100% de la longueur circonférentielle de la couche de produit auto-obturant 80. L'épaisseur moyenne EE1, EE2, EE3, EE4 respectivement de chaque portion axiale épaisse 90, 92, 94, 96 et l'épaisseur moyenne EM1, EM2, EM3 respectivement de chaque portion axiale mince 100, 102, 104 est circonférentiellement sensiblement constante sur au moins 50%, de préférence sur au moins 75% et plus préférentiellement sur au moins 95% et ici sur 100% de la longueur circonférentielle de la couche de produit auto-obturant 80. En l'espèce, EE1=EE2=EE3=EE4=3,45 mm et EM1=EM2=EM3=1,95 mm.

Chaque portion axiale épaisse 90, 92, 94, 96 comprend respectivement une portion axiale 90', 92', 94', 96' s'étendant axialement au droit respectivement de chaque découpure circonférentielle principale 52, 54, 56, 58. La couche de produit auto-obturant 80 comprend donc N=4 portions axiales 90' à 96' s'étendant axialement au droit d'une des N découpures circonférentielles principales 52 à 58. Chaque portion axiale 90' à 96' présente une épaisseur moyenne Eai > 0 de produit auto-obturant avec i allant de 1 à 4. En l'espèce, Ea1=Ea2=Ea3=Ea4=3,50 mm.

Chaque portion axiale épaisse 90, 92 comprend également respectivement une portion axiale 90", 92" s'étendant axialement au droit de la première et de la deuxième nervure latérale 68, 70. Chaque portion 90", 92" présente respectivement une épaisseur moyenne Ec1>0, Ec2>0. En l'espèce, Ec1=Ec2=3,50 mm.

Chaque portion axiale mince 100, 102, 104 comprend respectivement une portion axiale 100', 102', 104' s'étendant axialement au droit respectivement de chaque nervure centrale 62, 64, 66. La couche de produit auto-obturant 80 comprend donc Q=N-1=3 portions axiales 100', 102', 104' s'étendant axialement au droit d'une des Q nervures centrales 62, 64, 66. Chaque portion axiale 100', 102', 104' est agencée axialement entre deux portions axiales adjacentes 90' à 96'. Chaque portion axiale 100', 102', 104' présente une épaisseur moyenne Ebj ≥ 0 de produit auto-obturant avec j allant de 1 à 3. En l'espèce, Eb1=Eb2=Eb3=2,00 mm.

On notera que pour chaque valeur de i allant de 1 à N, au moins 50% des valeurs de j allant de 1 à Q, de préférence 75% des valeurs de j allant de 1 à Q et ici 100% des valeurs de j allant de 1 à Q sont telles que Ebj < Eai, Ebj<Ec1 et Ebj<Ec2.

On notera également que pour chaque valeur de i allant de 1 à N, au moins 50% des valeurs de j allant de 1 à Q, de préférence 75% des valeurs de j allant de 1 à Q et ici pour 100% des valeurs de j allant de 1 à Q sont telles que d'une part, Eai ≥ 1,10 x Ebj, de préférence Eai ≥ 1,30 x Ebj et plus préférentiellement Eai ≥ 1,50 x Ebj et d'autre part, Eai ≤ 5,00 x Ebj, de préférence Eai ≤ 4,00 x Ebj et plus préférentiellement Eai ≤ 2,50 x Ebj. Ici, pour chaque valeur de i allant de 1 à N, 100% des valeurs de j allant de 1 à Q sont telles que Eai/Ebj=1,75.

On notera également au moins 50% des valeurs de j allant de 1 à Q, de préférence 75% des valeurs de j allant de 1 à Q et ici 100% des valeurs de j allant de 1 à Q sont telles que d'une part, Ec1 ≥ 1,10 x Ebj et Ec2 ≥ 1,10 x Ebj, de préférence Ec1 ≥ 1,30 x Ebj et Ec2 ≥ 1,30 x Ebj et plus préférentiellement Ec1 ≥ 1,50 x Ebj et Ec2 ≥ 1,50 x Ebj et, d'autre part, Ec1 ≤ 5,00 x Ebj et Ec2 ≤ 5,00 x Ebj, de préférence Ec1 ≤ 4,00 x Ebj et Ec2 ≤ 4,00 x Ebj et plus préférentiellement Ec1 ≤ 2,50 x Ebj et Ec2 ≤ 2,50 x Ebj. Ici, 100% des valeurs de j allant de 1 à Q sont telles que Ec1/Ebj=1,75 et Ec2/Ebj=1,75.

Chaque portion axiale épaisse 90, 92, 94, 96 est au moins en partie confondue avec tout ou partie respectivement de chaque portion axiale 90', 92', 94', 96'. En l'espèce, comme cela est visible sur la figure 1, chaque portion axiale épaisse 90, 92, 94, 96 présente une largeur axiale supérieure ou égale à la largeur axiale respectivement de chaque découpure circonférentielle principale 52, 54, 56, 58. Ainsi, chaque portion axiale épaisse 94, 96 présente respectivement une largeur axiale W3, W4 telle que d'une part, W3/La3 ≥ 0,50 et W4/La4 ≥ 0,50, de préférence W3/La3 > 1,00 et W4/La4 > 1,00 et d'autre part, W3/La3 ≤ 4,00 et W4/La4 ≤ 4,00, de préférence W3/La3 ≤ 3,00 W4/La4 ≤ 3,00, plus préférentiellement W3/La3 ≤ 2,00 et W2/La2 ≤ 2,00, encore plus préférentiellement W3/La3 ≤ 1,50 et W4/La4 ≤ 1,50 et très préférentiellement W3/La3 ≤ 1,25 et W4/La4 ≤ 1,25. En l'espèce, W3=W4=13,5 mm de sorte que W3/La3= W4/La4=1,08.

En outre, chaque portion axiale épaisse 90, 92 est au moins en partie confondue avec tout ou partie de chaque portion axiale 90", 92". En l'espèce, comme cela est visible sur la figure 1, chaque portion axiale épaisse 90, 92 présente une largeur axiale supérieure ou égale à la largeur axiale respectivement de chaque découpure circonférentielle principale 90", 92". Ainsi, chaque portion axiale épaisse 90, 92 présente respectivement une largeur axiale W1, W2 telle que d'une part, W1/Lc1 ≥ 0,50 et W2/Lc2 ≥ 0,50, de préférence W1/Lc1 > 1,00 et W2/Lc2 > 1,00. En l'espèce, W1=W2=44 mm de sorte que W1/Lc1 = W2/Lc2 =1,33.

En outre, on a W1/La1 ≥ 0,50 et W2/La2 ≥ 0,50, de préférence W1/La1 > 1,00 et W2/La2 > 1,00 et ici W1/La1 = W2/La2 =4,40.

L'ensemble des conditions satisfaites par les différentes portions axiales 90 à 96, 90' à 96', 90", 92", 100 à 104 et 100' à 104' le sont sur au moins 50%, de préférence sur au moins 75% et plus préférentiellement sur au moins 95% et ici sur 100% de la longueur circonférentielle de la couche de produit auto-obturant 80.

Chaque portion axiale 90' à 96', 90", 92" et 100' à 104' de la couche de produit auto-obturant s'étendant au droit de chaque découpure 52 à 58 et de chaque nervure 62 à 70 s'étend circonférentiellement continûment sur au moins 50%, de préférence sur au moins 75% et plus préférentiellement sur au moins 95% et ici sur 100% de la longueur circonférentielle de la couche de produit auto-obturant 80.

L'épaisseur moyenne Ea1 à Ea4, Ec1, Ec2 et Eb1 à Eb3 de chaque portion axiale 90' à 96', 90", 92" et 100' à 104' est circonférentiellement sensiblement constante sur au moins 50%, de préférence sur au moins 75% et plus préférentiellement sur au moins 95% et ici sur 100% de la longueur circonférentielle de la couche de produit auto-obturant 80.

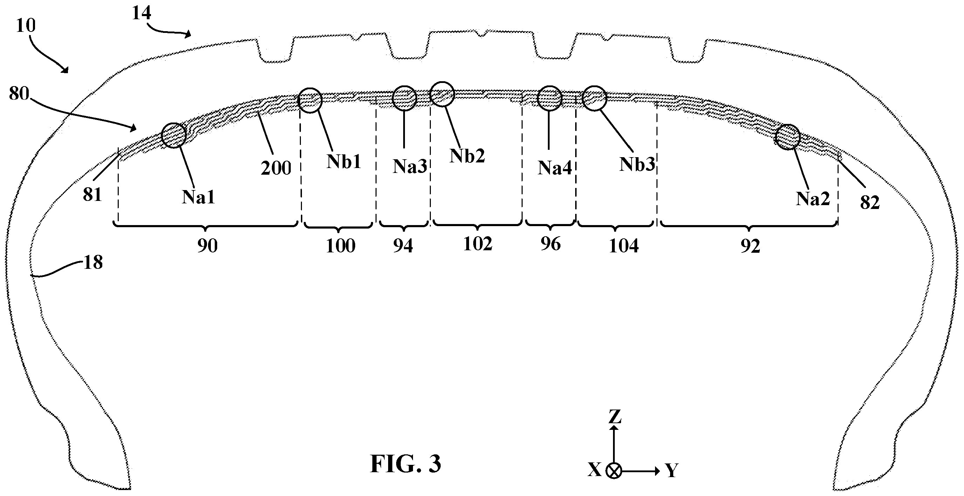

On va maintenant décrire un procédé de fabrication du pneumatique 10 en référence à la figure 3.

On dispose d'un pneumatique à l'état neuf dans son état vulcanisé dépourvu de la couche de produit auto-obturant 80.

On dispose d'un dispositif d'extrusion et d'un dispositif d'application d'une bande 200 du produit auto-obturant présentant une largeur égale à 15 mm et une épaisseur égale à 0,9 mm. Un tel dispositif est notamment décrit dans WO2015/173120 et comprend n. En variante, on pourra utiliser un cordon du produit auto-obturant.

On enroule sur plusieurs tours circonférentiels, ici sur 33 tours circonférentiels, la bande 200 de produit auto-obturant radialement à l'intérieur de la couche d'étanchéité 18 du pneumatique. Cette étape d'enroulage est conduite selon une loi d'enroulage de la bande 200 dont le résultat est illustré sur la figure 3.

On démarre l'enroulage de la bande 200 en partant de l'extrémité axiale 81 et on arrête l'enroulage de la bande 200 en arrivant à l'extrémité axiale 82. On enroule la bande 200 sans interrompre la bande 200 entre les deux extrémités axiales 81, 82.

Lors de l'étape d'enroulage, on enroule la bande 200 sur elle-même sur Nai > 1 tours circonférentiels radialement superposés sur chaque portion axiale épaisse 90, 92, 94, 96 de la couche de produit auto-obturant 80, i allant de 1 à 4. On enroule la bande 200 sur elle-même sur Nbj > 1 tours circonférentiels radialement superposés sur chaque portion axiale mince 100, 102, 104 de la couche de produit auto-obturant 80, j allant de 1 à M. Pour toute valeur de i allant de 1 à L, au moins 50% des valeurs de j allant de 1 à M, de préférence 75% des valeurs de j allant de 1 à M et ici 100% des valeurs de j allant de 1 à M sont telles que Nbj < Nai. En l'occurrence, on a Na1=Na2=5 pour chaque portion axiale épaisse 90 et 92, Na3=Na4=4 pour chaque portion axiale épaisse 94, 96, Nb1=Nb2=Nb3=3 pour chaque portion axiale mince 100, 102, 104.

On notera que, pour chaque valeur de i allant de 1 à L, au moins 50% des valeurs de j allant de 1 à M, de préférence 75% des valeurs de j allant de 1 à M et plus préférentiellement et ici 100% des valeurs de j allant de 1 à M sont telles que, d'une part Nai/Nbj ≥ 1,20 et, d'autre part, Nai/Nbj ≤ 3,00, de préférence Nai/Nbj ≤ 2,75 et plus préférentiellement Nai/Nbj ≤ 2,50.

Pour réaliser cette étape d'enroulage, la loi d'enroulage comprend plusieurs paramètres permettant de faire varier axialement l'épaisseur de la couche de produit auto-obturant 80. Ces paramètres comprennent un pas d'enroulage de la bande 200, une vitesse d'enroulage de la bande 200 par rapport à un dispositif d'application de la bande 200, une vitesse de déplacement axial du pneumatique 10 par rapport à un dispositif d'application de la bande 200 dans le pneumatique 10, un débit d'extrusion d'un dispositif d'extrusion de la bande 200, une largeur de la bande 200 ou encore une épaisseur de la bande 200. Il est possible de choisir de faire varier un seul de ces paramètres ou bien plusieurs simultanément. Avantageusement, on a ici fait varier uniquement le pas d'enroulage de la bande 200 afin de faire varier axialement l'épaisseur de la couche de produit auto-obturant 80 sur au moins 50%, de préférence sur au moins 75%, plus préférentiellement sur au moins 95% et ici sur 100% de la longueur circonférentielle de la couche de produit auto-obturant 80 et d'obtenir la couche illustrée sur la figure 3.

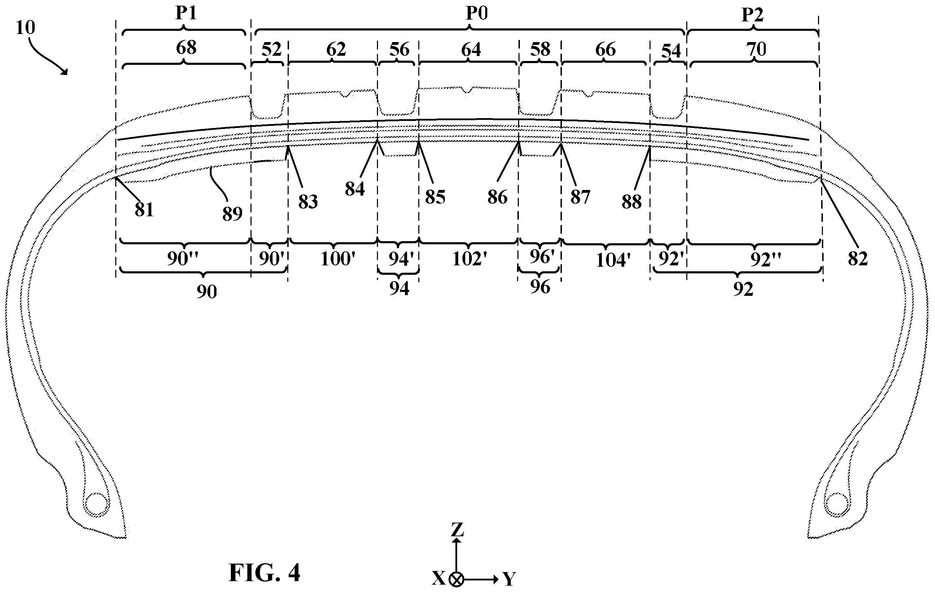

On va maintenant décrire en référence à la figure 4 un pneumatique selon un deuxième mode de réalisation de l'invention. Les éléments analogues à ceux du premier mode de réalisation sont désignés par des références identiques.

A la différence du pneumatique selon le premier mode de réalisation, chaque portion axiale épaisse 90 à 96 est totalement confondue avec respectivement une partie de chaque portion axiale 90' à 96' s'étendant axialement au droit respectivement de chaque découpure circonférentielle principale 52 à 58.

En outre, la couche de produit auto-obturant ne comprend aucune portion axiale mince 100, 102, 104. Ainsi, chaque portion axiale 100', 102', 104' s'étendant axialement au droit respectivement de chaque nervure centrale 62, 64, 66 présente une épaisseur nulle de produit auto-obturant. Chaque portion axiale 100', 102', 104' est agencée axialement entre deux des portions axiales 90' à 96' axialement adjacentes et également axialement entre les deux portions axiales 90" et 92".

Lors du procédé de fabrication du pneumatique 10 selon le deuxième mode de réalisation, on fait varier non plus le pas de pose mais l'épaisseur de la bande 200 qui est sensiblement nulle entre les portions axiales 90' à 96' axialement adjacentes. Ainsi, on enroule la bande 200 en interrompant la bande 200, ici trois fois, entre les deux extrémités axiales 81, 82.

L'invention ne se limite pas aux modes de réalisation décrits précédemment.

En effet, on pourra également envisager un mode de réalisation dans lequel chaque nervure centrale 62, 64, 66 est dépourvue de toute découpure transversale. Dans ce cas, on dirait que chaque nervure centrale 62, 64, 66 est non découpée.

## Revendications

1. Procédé de fabrication d'un pneumatique (10) comprenant :
- une bande de roulement (14),
- une couche interne d'étanchéité (18),
- au moins une couche d'un produit auto-obturant (80) s'étendant circonférentiellement radialement à l'intérieur d'une partie de la couche interne d'étanchéité (18),
procédé durant lequel on enroule sur plusieurs tours circonférentiels (Nai, Nbj) une bande ou un cordon (200) d'un produit auto-obturant radialement à l'intérieur de la couche d'étanchéité (18) du pneumatique encore dépourvu de la couche de produit auto-obturant (80) et au moins en partie au droit de la bande de roulement (18), l'étape d'enroulage étant conduite selon une loi d'enroulage des tours circonférentiels de la bande ou du cordon (200), **caractérisé en ce que**, au cours de l'étape d'enroulage, on fait varier au moins un paramètre de la loi d'enroulage permettant de faire varier axialement l'épaisseur de la couche de produit auto-obturant (80) sur au moins 50% de la longueur circonférentielle de la couche de produit auto-obturant (80).

2. Procédé selon la revendication précédente, dans lequel, au cours de l'étape d'enroulage, on fait varier au moins un des paramètres de la loi d'enroulage permettant de faire varier axialement l'épaisseur de la couche de produit auto-obturant (80) choisi parmi :
- un pas d'enroulage de la bande ou du cordon (200),
- une vitesse d'enroulage de la bande ou du cordon (200) par rapport à un dispositif d'application de la bande ou du cordon (200) dans le pneumatique (10),
- une vitesse de déplacement axial du pneumatique (10) par rapport à un dispositif d'application de la bande ou du cordon (200) dans le pneumatique (10),
- un débit d'extrusion d'un dispositif d'extrusion de la bande ou du cordon (200),
- une largeur de la bande ou du cordon (200),
- une épaisseur de la bande ou du cordon (200),
et de préférence, on fait varier le pas d'enroulage de la bande ou du cordon (200).

3. Procédé selon la revendication 1 ou 2, dans lequel :
- on enroule la bande sur elle-même ou le cordon (200) sur lui-même sur Nai > 1 tours circonférentiels radialement superposés sur L ≥ 1 portion(s) axiale(s) de la couche de produit auto-obturant (80), i allant de 1 à L,
- on enroule la bande sur elle-même ou le cordon sur lui-même sur Nbj > 1 tours circonférentiels radialement superposés ou on enroule la bande ou le cordon (200) sur Nbj=1 tour circonférentiel sur M ≥ 1 portion(s) axiale(s) de la couche de produit auto-obturant (80), j allant de 1 à M,
pour chaque valeur de i allant de 1 à L, au moins 50% des valeurs de j allant de 1 à M, de préférence 75% des valeurs de j allant de 1 à M et plus préférentiellement 100% des valeurs de j allant de 1 à M sont telles que Nbj < Nai.

4. Procédé selon la revendication précédente, dans lequel, pour chaque valeur de i allant de 1 à L, au moins 50% des valeurs de j allant de 1 à M, de préférence 75% des valeurs de j allant de 1 à M et plus préférentiellement 100% des valeurs de j allant de 1 à M sont telles que Nai/Nbj ≥ 1,20, de préférence Nai/Nbj ≥ 1,50, plus préférentiellement Nai/Nbj ≥ 1,75 et encore plus préférentiellement Nai/Nbj ≥ 2,00.

5. Procédé selon la revendication 3 ou 4, dans lequel, pour chaque valeur de i allant de 1 à L, au moins 50% des valeurs de j allant de 1 à M, de préférence 75% des valeurs de j allant de 1 à M et plus préférentiellement 100% des valeurs de j allant de 1 à M sont telles que Nai/Nbj ≤ 3,00, de préférence Nai/Nbj ≤ 2,75 et plus préférentiellement Nai/Nbj ≤ 2,50.

6. Procédé selon l'une quelconque des revendications précédentes, dans lequel, la couche de produit auto-obturant (80) étant délimitée axialement par deux extrémités axiales (81, 82), on enroule la bande ou le cordon (200) de matériau auto-obturant sans interrompre la bande ou le cordon (200) entre les deux extrémités axiales (41, 42).

7. Procédé selon l'une quelconque des revendications précédentes, dans lequel, la couche de produit auto-obturant (80) étant délimitée axialement par deux extrémités axiales (81, 82), on démarre l'enroulage de la bande ou du cordon (200) de matériau auto-obturant en partant d'une desdites extrémités axiales (81, 82) et on arrête l'enroulage de la bande ou du cordon (200) de matériau auto-obturant en arrivant à l'autre desdites extrémités axiales (81, 82).

## Patentansprüche

1. Verfahren zur Herstellung eines Reifens (10), das Folgendes aufweist:
- einen Laufstreifen (14),
- eine innere Dichtungsschicht (18),
- mindestens eine Schicht eines selbstdichtenden Produkts (80), die sich radial im Inneren eines Teils der inneren Dichtungsschicht (18) in Umfangsrichtung erstreckt,
Verfahren, bei dem auf mehreren Umfangswindungen (Nai, Nbj) ein Streifen oder eine Raupe (200) aus einem selbstdichtenden Produkt radial im Inneren der Dichtungsschicht (18) des Reifens, der noch nicht mit der Schicht aus dem selbstdichtenden Produkt (80) versehen ist, und zumindest teilweise in Höhe des Laufstreifens (18) gewickelt wird, wobei der Wickelschritt gemäß einem Wickelgesetz der Umfangswindungen des Streifens oder der Raupe (200) durchgeführt wird, **dadurch gekennzeichnet, dass** im Laufe des Wickelschritts mindestens ein Parameter des Wickelgesetzes variiert wird, der es ermöglicht, die Dicke der Schicht aus selbstdichtendem Produkt (80) axial über mindestens 50 % der Umfangslänge der Schicht aus selbstdichtendem Produkt (80) zu variieren.

2. Verfahren nach dem vorhergehenden Anspruch, wobei während des Wickelschritts mindestens einer der Parameter des Wickelgesetzes variiert wird, der es ermöglicht, die Dicke der Schicht aus selbstdichtendem Produkt (80) axial zu variieren, ausgewählt aus:
- einer Wickelsteigung des Streifens oder der Raupe (200),
- einer Wickelgeschwindigkeit des Streifens oder der Raupe (200) in Bezug auf eine Vorrichtung zum Aufbringen des Streifens oder der Raupe (200) in den Reifen (10),
- einer Geschwindigkeit der axialen Bewegung des Reifens (10) in Bezug auf eine Vorrichtung zum Aufbringen des Streifens oder der Raupe (200) in den Reifen (10),
- einer Extrusionsrate einer Vorrichtung zum Extrudieren des Streifens oder der Raupe (200),
- einer Breite des Streifens oder der Raupe (200),
- einer Dicke des Streifens oder der Raupe (200),
wobei vorzugsweise die Wickelsteigung des Streifens oder der Raupe (200) variiert wird.

3. Verfahren nach Anspruch 1 oder 2, wobei:
- der Streifen um sich selbst oder die Raupe (200) um sich selbst auf Nai > 1 radial überlagerte Umfangswindungen auf L ≥ 1 axiale(n) Abschnitt(e) der Schicht des selbstdichtenden Produkts (80) gewickelt wird, wobei i von 1 bis L reicht,
- der Streifen um sich selbst oder die Raupe um sich selbst auf Nbj > 1 radial überlagerte Umfangswindungen gewickelt wird oder der Streifen oder die Raupe (200) um Nbj = 1 Umfangswindungen auf M ≥ 1 axiale(n) Abschnitt(e) der Schicht des selbstdichtenden Produkts (80) gewickelt wird, wobei j von 1 bis M reicht,
wobei für jeden Wert von i, der von 1 bis L reicht, mindestens 50 % der Werte von j, die von 1 bis M reichen, vorzugsweise 75 % der Werte von j, die von 1 bis M reichen, und stärker bevorzugt 100 % der Werte von j, die von 1 bis M reichen, so sind, dass Nbj < Nai ist.

4. Verfahren nach dem vorhergehenden Anspruch, wobei für jeden Wert von i, der von 1 bis L reicht, mindestens 50 % der Werte von j, die von 1 bis M reichen, vorzugsweise 75 % der Werte von j, die von 1 bis M reichen, und stärker bevorzugt 100 % der Werte von j, die von 1 bis M reichen, so sind, dass Nai/Nbj ≥ 1,20, vorzugsweise Nai/Nbj ≥ 1,50, stärker bevorzugt Nai/Nbj ≥ 1,75 und noch stärker bevorzugt Nai/Nbj ≥ 2,00 ist.

5. Verfahren nach Anspruch 3 oder 4, wobei für jeden Wert von i, der von 1 bis L reicht, mindestens 50 % der Werte von j, die von 1 bis M reichen, vorzugsweise 75 % der Werte von j, die von 1 bis M reichen, und stärker bevorzugt 100 % der Werte von j, die von 1 bis M reichen, so sind, dass Nai/Nbj ≤ 3,00, vorzugsweise Nai/Nbj ≤ 2,75 und stärker bevorzugt Nai/Nbj ≤ 2,50 ist.

6. Verfahren nach einem der vorhergehenden Ansprüche, wobei, da die Schicht des selbstdichtenden Produkts (80) axial durch zwei axiale Enden (81, 82) begrenzt ist, der Streifen oder die Raupe (200) aus selbstdichtenden Material gewickelt wird, ohne den Streifen oder die Raupe (200) zwischen den beiden axialen Enden (41, 42) zu unterbrechen.

7. Verfahren nach einem der vorhergehenden Ansprüche, wobei, da die Schicht des selbstdichtenden Produkts (80) axial durch zwei axiale Enden (81, 82) begrenzt ist, das Wickeln des Streifens oder der Raupe (200) aus selbstdichtendem Material von einem der axialen Enden (81, 82) aus gestartet wird und das Wickeln des Streifens oder der Raupe (200) aus selbstdichtendem Material gestoppt wird, wenn das andere der axialen Enden (81, 82) erreicht wird.

## Claims

1. Method for manufacturing a tyre (10) comprising:
- a tread (14),
- an airtight internal layer (18),
- at least one layer of a self-sealing product (80) extending circumferentially radially on the inside of part of the airtight internal layer (18),
during which method a strip or a bead (200) of a self-sealing product is wound through multiple circumferential turns (Nai, Nbj) radially on the inside of the airtight layer (18) of the tyre, which does not have the layer of self-sealing product (80) yet, and at least partially in line with the tread (18), the winding step being carried out according to a law for winding circumferential turns of the strip or of the bead (200), **characterized in that,** during the winding step, at least one parameter of the winding law making it possible to axially vary the thickness of the layer of self-sealing product (80) is varied over at least 50% of the circumferential length of the layer of self-sealing product (80).

2. Method according to the preceding claim, wherein, during the winding step, at least one of the parameters of the winding law making it possible to axially vary the thickness of the layer of self-sealing product (80) is varied, the said at least one parameter being chosen from among:
- a winding pitch of the strip or of the bead (200),
- a winding speed of the strip or of the bead (200) in relation to a device for applying the strip or the bead (200) to the inside of the tyre (10),
- an axial movement speed of the tyre (10) in relation to a device for applying the strip or the bead (200) to the inside of the tyre (10),
- an extrusion rate of a device for extruding the strip or the bead (200),
- a width of the strip or of the bead (200),
- a thickness of the strip or of the bead (200),
and preferably, the winding pitch of the strip or of the bead (200) is varied.

3. Method according to Claim 1 or 2, wherein:
- the strip or the bead (200) is wound on itself through Nai > 1 radially superposed circumferential turns over L ≥ 1 axial portion(s) of the layer of self-sealing product (80), with i ranging from 1 to L,
- the strip or the bead is wound on itself through Nbj > 1 radially superposed circumferential turns or the strip or the bead (200) is wound through Nbj = 1 circumferential turn over M ≥ 1 axial portion(s) of the layer of self-sealing product (80), with j ranging from 1 to M,
for each value of i ranging from 1 to L, at least 50% of the values of j ranging from 1 to M, preferably 75% of the values of j ranging from 1 to M and more preferably 100% of the values of j ranging from 1 to M are such that Nbj < Nai.

4. Method according to the preceding claim, wherein, for each value of i ranging from 1 to L, at least 50% of the values of j ranging from 1 to M, preferably 75% of the values of j ranging from 1 to M and more preferably 100% of the values of j ranging from 1 to M are such that Nai/Nbj ≥ 1.20, preferably Nai/Nbj ≥ 1.50, more preferably Nai/Nbj ≥ 1.75 and even more preferably Nai/Nbj ≥ 2.00.

5. Method according to Claim 3 or 4, wherein, for each value of i ranging from 1 to L, at least 50% of the values of j ranging from 1 to M, preferably 75% of the values of j ranging from 1 to M and more preferably 100% of the values of j ranging from 1 to M are such that Nai/Nbj ≤ 3.00, preferably Nai/Nbj ≤ 2.75 and more preferably Nai/Nbj ≤ 2.50.

6. Method according to any one of the preceding claims, wherein, with the layer of self-sealing product (80) being axially delimited by two axial ends (81, 82), the strip or the bead (200) of self-sealing material is wound without interrupting the strip or the bead (200) between the two axial ends (41, 42).

7. Method according to any one of the preceding claims, wherein, with the layer of self-sealing product (80) being axially delimited by two axial ends (81, 82), the strip or the bead (200) of self-sealing material is wound starting from one of the said axial ends (81, 82) and the winding of the strip or of the bead (200) of self-sealing material is stopped when the other one of the said axial ends (81, 82) is reached.
